# EUROPEAN PATENT SPECIFICATION

(11) **EP 3 228 228 B1**
(45) Date of publication and mention of the grant of the patent: **22.05.2019**
(21) Application number: 16865278.2
(22) Date of filing: 19.12.2016
(51) Int. Cl.: A47G 1/17, F16B 11/00

(54) **HOOK ASSEMBLY INCLUDING A HOOK DEVICE**
HAKENVORRICHTUNG AUFWEISENDE HAKENANORDNUNG
ENSEMBLE DE CROCHET COMPRENANT UN DISPOSITIF DE CROCHET

(30) Priority: 31.12.2015 CN 201511028461
(43) Date of publication of application: 11.10.2017
(73) Proprietor: Pantene Industrial Co., Limited, Tsuen Wan, Hong Kong (CN)
(72) Inventor: HO, Hon Ching, Tsuen Wan Hong Kong (CN); DIEP, The Binh, Tsuen Wan Hong Kong (CN); CHUNG, Kim Por, Tsuen Wan Hong Kong (CN)
(74) Representative: Sun, Yiming
(86) International application number: PCT/CN2016/110633
(87) International publication number: WO 2017/114197

(56) References cited:
- CN-A- 105 433 733
- CN-U- 201 657 345
- CN-Y- 2 222 259
- CN-Y- 2 222 259
- CN-Y- 2 246 213
- CN-Y- 2 280 795
- JP-A- H04 348 175
- JP-A- H04 348 175
- JP-A- S56 159 268
- US-A- 4 488 335
- US-A1- 2003 235 661

## Description

### FIELD OF THE INVENTION

The present invention relates to articles for daily use, and more particularly to a hook assembly comprising a hook device, the hook device comprising a hook base, a hook tip provided on a front side of the hook base, and a hot melt adhesive layer, which is provided on a rear side of the hook base.

### BACKGROUND OF THE INVENTION

A hook assembly of the generic type specified above is disclosed in each of the documents JP H04 348175 A and CN 2 222 259 Y.

In our daily life, hanging somethings on the wall, metal plate surface, wooden plate surface and so on, is generally achieved by drilling a hole in the wall and providing a nail or insert therein according to the traditional way. Although it has high strength, the above manner has gradually been eliminated due to the damage to the wall and inconvenient dismantling. Instead, a hook product is provided, one side of which is fixed to the wall and the other side of which is provided with a hook tip for hanging somethings.

At present, the commonly used hook devices on the market can be divided into three groups: vacuum type hook device, hook device with self-adhesive layer and hook device with hot melt adhesive layer. The vacuum type hook device has the advantages that it is easy to use and remove without marks, but it has high demands of the wall or other fixed surface and it falls out easily due to air leakage after being used for a period of time, thus it is not strong enough. The hook device with self-adhesive layer is also easy to use, but the self-adhesive layer thereof is prone to aging and then lose adhesiveness, which will cause the hook device falling out finally, and if the hook device is removed before aging, the mark will be left and it is difficult to be removed. The hook device with hot melt adhesive layer, as a new hook product, has all the advantages of the vacuum type hook device and the hook device with self-adhesive layer. It demands little of the wall or other fixed surface, has high binding strength and is not prone to leave a mark. However, the structure of the conventional hook device with hot melt adhesive layer is like that of the conventional hook device with self-adhesive layer, and the only difference is that the self-adhesive layer is replaced with the hot melt adhesive layer. When use or remove the hook device, it needs to use an extra heating device such as a lighter to heat the hot melt adhesive layer, which will cause inconvenient use and bring safe hidden trouble.

Therefore, it is necessary to provide a hook product which is easy to use, easy to be removed and is safe and reliable, so as to solve the defects of the prior art.

### SUMMARY OF THE INVENTION

A technical problem to be solved is to provide a hook assembly, which is easy to use, easy to be removed and is safe and reliable.

To solve the above problem, there is provided a hook assembly comprising a hook device, comprising a hook base, a hook tip provided on a front side of the hook base, and a hot melt adhesive layer, which is provided on a rear side of the hook base, wherein further the hook device also comprises a heating module provided on a rear side of the hook base and comprising a heating element which contacts with the hot melt adhesive layer, and the hook assembly also comprises a connecting cable, the connecting cable comprising a cable body, a first connector provided on an end of the cable body for connecting the hook device and a second connector provided on another end of the cable body for connecting an external power source, the first connector being provided with a control circuit therein and connected to the hook device via an interface so that the control circuit is electrically connected to the heating element to control a heating time of hot melt adhesive layer.

Preferably, the heating module further includes a support element, the hot melt adhesive layer is fixed on the support element, the heating element is embedded in the hot melt adhesive layer, and the hook base is removably assembled onto the support element.

Preferably, each of two sides of the support element has a sliding slot formed thereon, the rear of the hook base has a sliding rail formed on each side thereof for corresponding to the sliding slot, and the sliding rail inserts into the corresponding sliding slot so that the hook base is removably assembled onto the support element.

Preferably, the heating element is heating wire.

Preferably, the second connector is USB interface or plug.

Preferably, the first connector is provided with a switch which is electrically connected to the control circuit, so as to control the control circuit.

Preferably, the first connector is removably connected to the cable body via a USB interface.

Compared with the prior art, the hook assembly of the present invention is provided with a heating element and the heating element can be connected to a control circuit included in the hook device or an external control circuit and connected to the power source, thus it is convenient to heat the hot melt adhesive layer and the heating time can be controlled by the control circuit so as to make the adhesive layer be melted to a suitable state for facilitating to use and remove, and it is reusable. In addition, the a hook assembly further includes a connecting cable provided for connecting a power source. The connecting cable is provided with a control circuit to control a heating time of the hot melt adhesive layer. After the power source is switched on, by means of the heating element controlled by the control circuit, the hot melt adhesive layer will be heated and then melted so that it is easy to be fixed to or removed from a flat surface. The hook assembly of the present invention is easy to use and remove, it is safe, reliable and reusable, and it has good adhesive property, thus it can bring great economic benefit and environmental protection benefit.

The above mentioned and other features of the present invention, and the manner of attaining them, will become more apparent and the present invention itself will be better understood by reference to the following description of embodiments of the present invention taken in conjunction with the accompanying drawings.

### BRIEF DESCRIPTION OF THE DRAWINGS

FIG. 1 is a structure diagram of the hook assembly according to a first embodiment of the present invention;
FIG. 2 is a circuit diagram illustrating the control principle of the hook assembly of the present invention;
FIG. 3 is a perspective view of the hook device included in the hook assembly shown in FIG. 1;
FIG. 4 is an exploded view of the hook device shown in FIG. 3;
FIG. 5 is a structure diagram of the hook assembly according to a second embodiment of the present invention;
FIG. 6 is a structure diagram of the hook assembly according to a third embodiment of the present invention;
FIG. 7 is a structure diagram of the hook assembly according to a fourth embodiment of the present invention.

### DETAILED DESCRIPTION OF ILLUSTRATED EMBODIMENTS

For understanding the objective, the technical content and the advantages of the present invention more sufficiently, some embodiments of the present invention will be described as follows, by way of example only, with reference to the accompanying drawings. The embodiments disclosed below are not intended to be exhaustive or to limit the invention to the precise forms disclosed in the following detailed description.

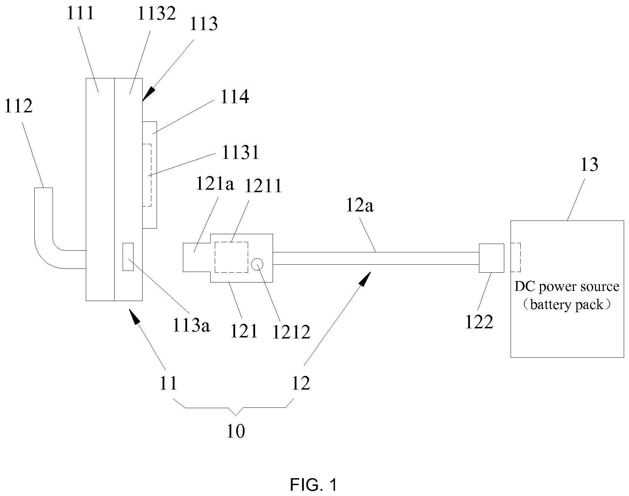

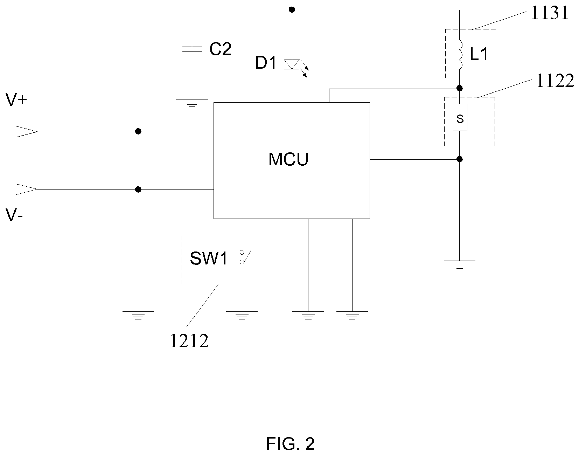

FIG. 1 illustrates a first embodiment of the hook assembly according to the present invention. FIG. 2 illustrates a circuit schematic diagram of the hook assembly according to the present invention.

At first, referring to FIG. 1, the hook assembly 10 according to the first embodiment includes a hook device 11 and a connecting cable 12 cooperated with the hook device 11 for use. The hook device 11 includes a hook base 111, a front side of which is provided with a hook tip 112 and a rear side of which is provide with a heating module 113 and a hot melt adhesive layer 114. The heating module 113 includes a heating element 1131 and the heating element 1131 contacts with the hot melt adhesive layer 114. The connecting cable 12 includes a cable body 12a, one end of the cable body 12a has a first connector 121 for connecting the hook device 11, and the other end of the cable body 12a has a second connector 122 for connecting an external power source. There is a control circuit 1211 provided in the first connector 121 which is connected to the hook device 11 via an interface so that the control circuit 1211 is electrically connected to the heating element 1131 to control a heating time of the hot melt adhesive layer 114. Preferably, the first connector 121 is provided with a switch 1212 which is electrically connected to the control circuit 1211, so as to control the control circuit 1211. In this preferred embodiment, the second connector 122 is USB interface so as to connect with a DC power source or battery pack 13.

Referring to FIG. 2, in this embodiment, the control circuit 1121 mainly includes a microcontroller unit (MCU). The heating element 1131 is electrically connected to the microcontroller unit via interface circuit and controlled by the microcontroller unit (MCU). The microcontroller unit (MCU) is mainly used for control the heating time of the hot melt adhesive layer 114, for example, by means of presetting a working time of the heating element 1131 according to the power of the heating element, the specific material and the size of the hot melt adhesive layer 114. And different melting rates are required when the hook device 11 is used and removed, thus different working times of the heating element 1131 are needed. The specific working time of the heating element 1131 could be preset by means of writing corresponding programs onto the microcontroller unit (MCU). Based on the above design, the microcontroller unit (MCU) will start to work after pressing the switch so as to switch on the external power source. Under the control of the microcontroller unit (MCU), the heating element will start to heat the hot melt adhesive layer 114 for a preset time, thus the hook device 11 can be fixed on a flat surface such as wall surface by the user, and then the connecting cable 12 can be removed from the hook device 11 so as to be used for another hook device. In this preferred embodiment, a LED indicator D1 is connected to the microcontroller unit (MCU) so as to show the working state of the heating element 1131, for example, light is on when the heating element 1131 starts to work and it is off when the heating element 1131 stops to work. Additionally, in this preferred embodiment, a fuse wire is connected to the microcontroller unit (MCU) so as to achieve a function of over current protection, thereby further improving the safety performance of the hook assembly 10.

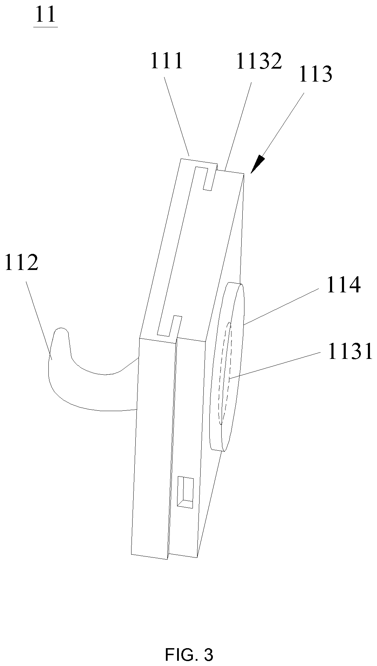

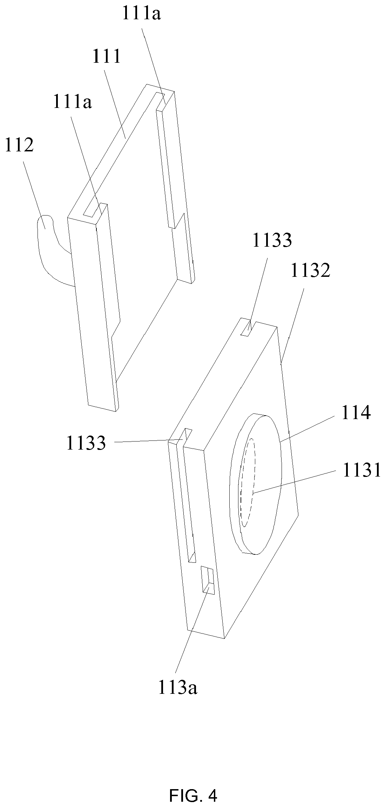

Referring to FIG. 3 and FIG. 4, in some embodiments, such as in this preferred embodiment, the hook device 11 is a separated structural design. Specifically, the heating module 113 further includes a support element 1132; the hot melt adhesive layer 114 is fixed on the support element; and the heating element is embedded in the hot melt adhesive layer. When using, the support element 1132 will be fixed onto a flat surface such as wall surface firstly and then the rear side of the hook base 111 will be removably assembled onto the support element 1132. In some embodiments, for example in this preferred embodiment, each of two sides of the support element 1132 has a sliding slot 1133 formed thereon, each side of the rear of the hook base 111 has a sliding rail 111a formed thereon for corresponding to the sliding slot 1133, the sliding rail 111a inserting corresponding sliding slot 1133 so that the hook base 111 is removably assembled onto the support element 1132. Based on the above separated structural design, the support element 1132 could be fixed onto a flat surface such as wall surface and then the hook base is mounted. Compared with pressing the whole hook device 11 with the hook 112 onto the wall, it is easier to press the support element 1132 to be fixed on the wall. And a single support element 1132 can be used with different hook bases 111, thus the user can replace the base hook 111 with others according actual needs after the support element being fixed on the wall.

Preferably, the heating element 1131 is a heating wire winding in spirals, which is embedded in the hot melt adhesive layer 114 so as to heat the hot melt adhesive layer 114 evenly. Understandably, in other embodiments, the hook device 11 also could be a one-piece structure, for example, the heating element 1131 and the hot melt adhesive layer 114 are fixed onto the rear of the hook base 111 directly.

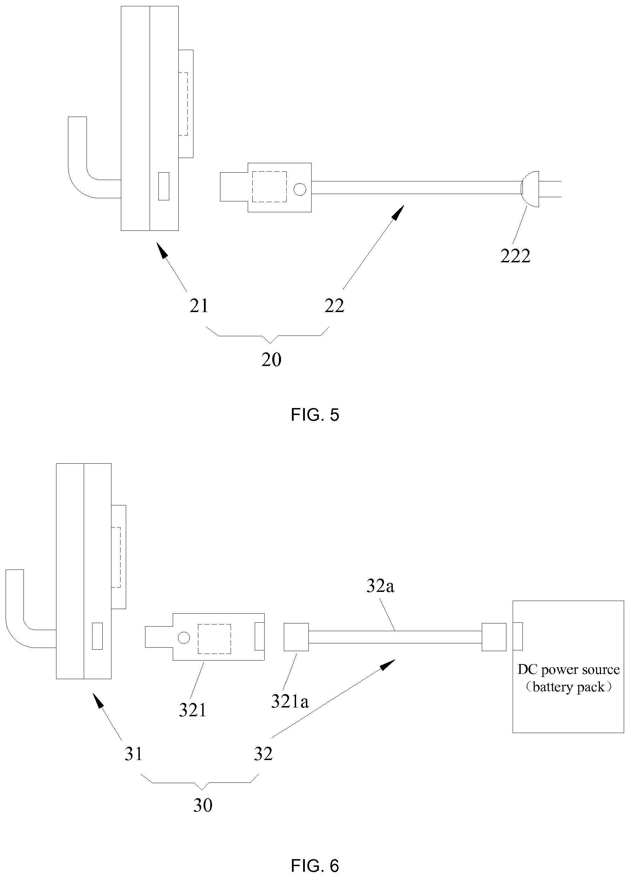

FIG. 5 illustrates a second embodiment of the hook assembly of the present invention. Referring to FIG. 5, in this embodiment, the hook assembly 20 includes hook device 21 and connecting cable 22. The hook device 21 has the same structure as that of the hook device 11 of the first embodiment. Compared with the first embodiment, the only difference of the connecting cable 22 of this embodiment is that the second connector 222 is designed to be a plug for easy to connect AC power source directly.

FIG. 6 illustrates a third embodiment of the hook assembly of the present invention. Referring to FIG. 6, in this embodiment, the hook device 31 of the hook assembly 30 has the same structure as that of the hook device 11 of the first embodiment. The improvement of this embodiment is that the first connector 321 of the connecting cable 32 is not connected to the cable body 32a fixedly but connected to it removably via a USB interface 321a. Based on this, the conventional USB cable can be used as one part of the hook assembly of the present invention, thereby saving production cost and enhancing compatibility.

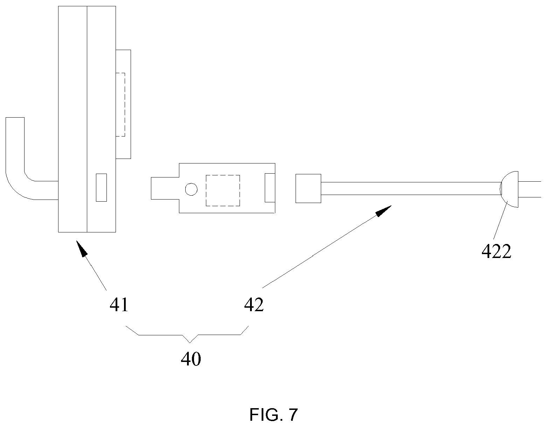

FIG. 7 illustrates a fourth embodiment of the hook assembly of the present invention. Referring to FIG. 7, the hook assembly 40 of this embodiment is a modified design according to the hook assembly 30 of the third embodiment. The hook device 41 has the same structure as that of the hook device 31 of the third embodiment. Compared with the third embodiment, the only difference of the connecting cable 42 of this embodiment is that the second connector 422 is designed to be a plug for easy to connect with AC power source directly.

The present invention discloses a hook assembly, which includes a hook device and further includes a connecting cable provided for connecting a power source. The connecting cable is provided with a control circuit to control a heating time of the hot melt adhesive layer. After the power source is switched on, by means of the heating element controlled by the control circuit, the hot melt adhesive layer will be heated and then melted so that it is easy to be fixed to or removed from a flat surface. The hook assembly of the present invention is easy to use and remove, it is safe, reliable and reusable, and it has good adhesive property, thus it can bring great economic benefit and environmental protection benefit.

Above descriptions of embodiments are provided for further illustrating the technical content of the present invention, so as to facilitate understanding and it should be understood that the invention is not to be limited to the disclosed embodiments. Any technique extension and recreation additional to the present invention is included within the scope of protection of the invention.

## Claims

1. A hook assembly (10, 20, 30, 40, 50, 60) comprising a hook device (11, 21 31, 41, 51, 61), the hook device comprising a hook base (111), a hook tip (112) provided on a front side of the hook base, and a hot melt adhesive layer (114), which is provided on a rear side of the hook base, **characterized in that**:
the hook device also comprises a heating module (113) provided on a rear side of the hook base and comprising a heating element (1131, 5131) which contacts with the hot melt adhesive layer, and
the hook assembly also comprises a connecting cable (12, 22, 32, 42, 52, 62), the connecting cable comprising a cable body (12a, 32a), a first connector (121, 321) provided on an end of the cable body for connecting the hook device and a second connector (122, 222, 422, 522, 622) provided on another end of the cable body for connecting an external power source, the first connector being provided with a control circuit (1211, 5211) therein and connected to the hook device via an interface so that the control circuit is electrically connected to the heating element to control a heating time of hot melt adhesive layer.

2. The hook device according to claim 1, wherein the heating module further comprises a support element (1132, 5132), the hot melt adhesive layer is fixed on the support element, the heating element is embedded in the hot melt adhesive layer, and the hook base is removably assembled onto the support element.

3. The hook device according to claim 2, wherein each of two sides of the support element has a sliding slot (1133) formed thereon, the rear of the hook base has a sliding rail (111a) formed on each side thereof for corresponding to the sliding slot, and the sliding rail inserts into the corresponding sliding slot so that the hook base is removably assembled onto the support element.

4. The hook device according to claim 1, wherein the heating element is heating wire.

5. The hook assembly according to any of claims 1 to 4, wherein the second connector is a USB interface or a plug.

6. The hook assembly according to any of claims 1 to 4, wherein the first connector is provided with a switch (1212, 5212) which is electrically connected to the control circuit so as to control the control circuit.

7. The hook assembly according to any of claims 1 to 4, wherein the first connector is removably connected to the cable body via a USB interface (321a).

## Patentansprüche

1. Hakenanordnung (10, 20, 30, 40, 50, 60), umfassend eine Hakenvorrichtung (11, 21, 31, 41, 51, 61), wobei die Hakenvorrichtung eine Hakenbasis (111), eine Hakenspitze (112), die auf einer Vorderseite der Hakenbasis bereitgestellt ist, und eine Heißschmelzklebstoffschicht (114), die auf einer Rückseite der Hakenbasis bereitgestellt ist, umfasst, **dadurch gekennzeichnet, dass**:
die Hakenvorrichtung auch ein Heizmodul (113) umfasst, das auf einer Rückseite der Hakenbasis bereitgestellt ist und ein Heizelement (1131, 5131) umfasst, das mit der Heißschmelzklebstoffschicht in Kontakt kommt, und
die Hakenanordnung auch ein Verbindungskabel (12, 22, 32, 42, 52, 62) umfasst, wobei das Verbindungskabel einen Kabelkörper (12a, 32a), einen ersten Verbinder (121, 321), der auf einem Ende des Kabelkörpers zum Verbinden der Hakenvorrichtung bereitgestellt ist, und einen zweiten Verbinder (122, 222, 422, 522, 622), der auf einem anderen Ende des Kabelkörpers zum Verbinden einer externen Stromquelle bereitgestellt ist, wobei der erste Verbinder mit einer Steuerschaltung (1211, 5211) darin bereitgestellt und mit der Hakenvorrichtung über eine Schnittstelle derart verbunden ist, dass die Steuerschaltung mit dem Heizelement elektrisch verbunden ist, um eine Heizzeit einer Heißschmelzklebstoffschicht zu steuern.

2. Hakenvorrichtung nach Anspruch 1, wobei das Heizmodul ferner ein Tragelement (1132, 5132) umfasst, wobei die Heißschmelzklebstoffschicht auf dem Tragelement befestigt ist, wobei das Heizelement in der Heißschmelzklebstoffschicht eingebettet ist und wobei die Hakenbasis auf dem Tragelement entfernbar zusammengesetzt ist.

3. Hakenvorrichtung nach Anspruch 2, wobei jede von zwei Seiten des Tragelements einen Gleitschlitz (1133) aufweist, der darauf gebildet ist, wobei die Rückseite der Hakenbasis eine Gleitschiene (111a) aufweist, die auf jeder Seite davon entsprechend dem Gleitschlitz gebildet ist, und wobei die Gleitschiene in den entsprechenden Gleitschlitz derart eingesetzt ist, dass die Hakenbasis auf dem Tragelement entfernbar zusammengesetzt ist.

4. Hakenvorrichtung nach Anspruch 1, wobei das Heizelement Heizdraht ist.

5. Hakenanordnung nach einem der Ansprüche 1 bis 4, wobei der zweite Verbinder eine USB-Schnittstelle oder ein Stecker ist.

6. Hakenanordnung nach einem der Ansprüche 1 bis 4, wobei der erste Verbinder mit einem Schalter (1212, 5212) bereitgestellt ist, der mit der Steuerschaltung elektrisch verbunden ist, um die Steuerschaltung zu steuern.

7. Hakenanordnung nach einem der Ansprüche 1 bis 4, wobei der erste Verbinder mit dem Kabelkörper über eine USB-Schnittstelle (321a) entfernbar verbunden ist.

## Revendications

1. Ensemble de crochet (10, 20, 30, 40, 50, 60) comprenant un dispositif de crochet (11, 21, 31, 41, 51, 61), le dispositif de crochet comprenant une base de crochet (111), une pointe de crochet (112) prévue sur un côté avant de la base de crochet, et une couche d'adhésif thermofusible (114) qui est prévue sur un côté arrière de la base de crochet, **caractérisé en ce que** :
le dispositif de crochet comprend également un module de chauffage (113) prévu sur un côté arrière de la base de crochet et comprenant un élément de chauffage (1131, 5131) qui est en contact avec la couche d'adhésif thermofusible, et
l'ensemble de crochet comprend également un câble de connexion (12, 22, 32, 42, 52, 62), le câble de connexion comprenant un corps de câble (12a, 32a), un premier connecteur (121, 321) prévu sur une extrémité du corps de câble pour connecter le dispositif de crochet et un second connecteur (122, 222, 422, 522, 622) prévu sur une autre extrémité du corps de câble pour connecter une source de courant externe, le premier connecteur étant doté d'un circuit de commande (1211, 5211) à l'intérieur et connecté au dispositif de crochet par le biais d'une interface de façon à ce que le circuit de commande soit connecté électriquement à l'élément de chauffage pour commander un temps de chauffage de la couche d'adhésif thermofusible.

2. Dispositif de crochet selon la revendication 1, dans lequel le module de chauffage comprend en outre un élément de support (1132, 5132), la couche d'adhésif thermofusible est fixée sur l'élément de support, l'élément de support est enchâssé dans la couche d'adhésif thermofusible, et la base de crochet est montée de manière amovible sur l'élément de support.

3. Dispositif de crochet selon la revendication 2, dans lequel chacun des deux côtés de l'élément de support a une fente à coulisse (1133) formée dessus, l'arrière de la base de crochet a un rail de guidage (111a) formé sur chaque côté de celle-ci pour correspondre à la fente à coulisse, et le rail coulissant s'insère dans la fente à coulisse correspondante de façon à ce que la base de crochet soit montée de manière amovible sur l'élément de support.

4. Dispositif de crochet selon la revendication 1, dans lequel l'élément de chauffage est un câble chauffant.

5. Ensemble de crochet selon l'une quelconque des revendications 1 à 4, dans lequel le second connecteur est une interface USB ou une fiche.

6. Ensemble de crochet selon l'une quelconque des revendications 1 à 4, dans lequel le premier connecteur est doté d'un interrupteur (1212, 5212) qui est connecté électriquement au circuit de commande de façon à commander le circuit de commande.

7. Ensemble de crochet selon l'une quelconque des revendications 1 à 4, dans lequel le premier connecteur est connecté de manière amovible au corps de câble par le biais d'une interface USB (321a).
